# EUROPEAN PATENT SPECIFICATION

(11) **EP 4 471 582 B1**
(45) Date of publication and mention of the grant of the patent: **25.03.2026**
(21) Application number: 23787571.1
(22) Date of filing: 06.04.2023
(51) Int. Cl.: G06F 9/445, G06F 9/30

(54) **METHOD FOR PRE-FETCHING FUNCTION SEGMENT, AND NETWORK DEVICE**
VERFAHREN ZUM VORABRUF EINES FUNKTIONSSEGMENTS UND NETZWERKVORRICHTUNG
PROCÉDÉ DE PRÉ-EXTRACTION DE SEGMENT DE FONCTION ET DISPOSITIF RÉSEAU

(30) Priority: 15.04.2022 CN 202210395251
(43) Date of publication of application: 04.12.2024
(73) Proprietor: Huawei Technologies Co., Ltd., Shenzhen, Guangdong 518129 (CN)
(72) Inventor: CHEN, Hui, Shenzhen, Guangdong 518129 (CN); CHEN, Yunsheng, Shenzhen, Guangdong 518129 (CN); CHEN, Jiliang, Shenzhen, Guangdong 518129 (CN); BAI, Chongji, Shenzhen, Guangdong 518129 (CN)
(74) Representative: Isarpatent
(86) International application number: PCT/CN2023/086516
(87) International publication number: WO 2023/197926

(56) References cited:
- EP-A1- 3 076 299
- WO-A1-2022/057418
- CN-A- 108 153 533
- CN-A- 113 986 402
- US-A1- 2013 275 688
- BRAD CALDER ET AL: "Reducing transfer delay using Java class file splitting and prefetching", OOPSLA, ACM, US, 1 October 1999 (1999-10-01), pages 276 - 291, XP058101490, ISBN: 978-1-58113-238-0, DOI: 10.1145/320384.320412
- OTTONI GUILHERME ET AL: "Optimizing function placement for large-scale data-center applications", 2017 IEEE/ACM INTERNATIONAL SYMPOSIUM ON CODE GENERATION AND OPTIMIZATION (CGO), IEEE, 4 February 2017 (2017-02-04), pages 233 - 244, XP033069898, DOI: 10.1109/CGO.2017.7863743

## Description

### TECHNICAL FIELD

This disclosure generally relates to the field of computer technologies.

The invention, in particular, relates to a method for prefetching a function segment, a network device, and a computer program product.

### BACKGROUND

A function library is a set of functions with specific functions. Different types of function libraries can be created based on service requirements.

Currently, a method for prefetching a function segment is roughly as follows. After a starting program instruction is received, a file in a same function library is preloaded to a storage space of a memory, a current function segment is executed based on a function order of a program, and a next function segment is prefetched from the memory.

When a function is called across libraries, the called function segment and the current function segment are in different function libraries. Therefore, the next function segment that is prefetched is not the called function segment. As a result, an L1 cache is not hit. In this case, the called function segment needs to be searched for in the memory again. This affects program processing efficiency.

US 2013/275688 A1 discloses a data processing device and method and computer system. The data processing device is configured to process a source program to generate a first data segment, wherein, the first data segment comprises a first group of code segment corresponding to the source program, the first group of code segment is constituted by a plurality of code segments, and each code segment of the first group of code segment is stored at an assignable address in the storage medium. With the data processing device and method and computer system, an assignable storage of respective code segments generated by parsing the source program is implemented so as to facilitate the access and processing of the computer system.

The paper by BRAD CALDER ET AL: "Reducing transfer delay using Java class file splitting and prefetching", OOPSLA, ACM, US, 1 October 1999 (1999-10-01), pages 276-291, DOI: 10.1145/320384.320412 ISBN: 978-1-58113-238-0 addresses the technical problem of the transfer delay experienced when mobile Java programs are downloaded from a server to a client for execution. It is described that this delay can significantly impact the interactive experience of users, as they must wait for the program to be transferred before it can execute. The solution proposed in the paper involves two compiler optimizations, Java class file splitting and class file prefetching.

The paper by OTTONI GUILHERME ET AL: "Optimizing function placement for large-scale data-center applications", 2017 IEEE/ACM INTERNATIONAL SYMPOSIUM ON CODE GENERATION AND OPTIMIZATION (CGO), IEEE, 4 February 2017 (2017-02-04), pages 233-244, DOI: 10.1109/CGO.2017.7863743 [retrieved on 2017-02-23] 1.2 addresses the technical problem of optimizing function placement for large-scale data-center applications to improve performance. It is described in this paper that applications often have substantial working sets, making them suitable candidates for code-layout optimizations. However, the sheer volume of code can be a bottleneck for the system, affecting code locality and performance. The solution proposed in this paper involves using sample-based profiling data to optimize function placement. This methodology follows the principle behind AutoFDO, using profiling data collected from unmodified binaries running in production. Two improvements are introduced. One is a so-called a call-chain clustering algorithm which uses a directed call graph and considers the caller/callee relationships, which improves code locality by placing functions closer to their most common callers. This results in better cache and TLB efficiency. The other improvement is a selective use of huge pages with an evaluation of the use of huge pages for a program's text section on Linux. The authors describe that, while mapping entire code sections onto huge pages can be detrimental, selectively using huge pages for hot functions can further improve performance.

### SUMMARY

The object of the present invention is to provide a method for prefetching a function segment, a network device, and a computer program product such that function segments that are from different function libraries and that are called a large quantity of times can be consecutively arranged in a memory, such that a cache miss caused by cross-library call is reduced and a hit rate for prefetching a function segment is improved and program processing efficiency is improved. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides the following method for prefetching a function segment. In this method, after a starting program instruction is received, a loading script is obtained based on the starting program instruction. A dynamic library file including a first function segment and a second function segment is loaded to a memory based on the loading script. The first function segment is executed, and the second function segment is prefetched from the memory. The loading script includes an address offset of the first function segment and an address offset of the second function segment. A function corresponding to the first function segment and a function corresponding to the second function segment are from different function libraries. The address offset of the second function segment is equal to a sum of a size of the address offset of the first function segment and a size of a storage space of the first function segment. In other words, it indicates that the first function segment and the second function segment are stored at adjacent locations in the memory.

A quantity of times that the first function segment calls the second function segment is greater than a quantity of times that the first function segment calls another function segment, and the first function segment and the second function segment are adjacent in the memory. Therefore, a hit rate for prefetching an inter-library function segment can be improved, and a cache miss can be reduced, so that program processing efficiency is improved.

In a first possible implementation, the method further includes: if the loading script further includes an address offset of a third function segment and an address offset of a fourth function segment, and the dynamic library file further includes the third function segment and the fourth function segment, executing the third function segment and prefetching the fourth function segment from the memory. A function corresponding to the third function segment and a function corresponding to the fourth function segment are from a same function library. The address offset of the fourth function segment is equal to a sum of a size of the address offset of the third function segment and a size of a storage space of the third function segment. In other words, it indicates that the third function segment and the fourth function segment are stored at adjacent locations in the memory. A quantity of times that the third function segment calls the fourth function segment is greater than a quantity of times that the third function segment calls another function segment, and the third function segment and the fourth function segment are adjacent in the memory. Therefore, a hit rate for prefetching an intra-library function segment can be improved, and program processing efficiency can be improved.

Based on the first aspect or the first possible implementation, in a second possible implementation, before the starting program instruction is received, the method further includes: after a program tracing file is obtained, generating a call graph based on the program tracing file, determining, based on the call graph, a first function segment sequence including the first function segment and the second function segment, creating a linker script based on sequence information of the first function segment sequence, compiling a program into a plurality of function segments, obtaining the first function segment sequence from the plurality of function segments based on the linker script, and generating a dynamic library file including the first function segment sequence. The call graph includes a function call order and a quantity of function call times. The linker script includes the sequence information of the first function segment sequence. The sequence information includes a sequence identifier, a function segment identifier in the sequence, and a function segment order. Therefore, the dynamic library file including the first function segment sequence may be generated. The first function segment sequence includes function segments corresponding to different function libraries. Similarly, a function segment sequence may be formed by using all or some function segments in different function libraries based on a quantity of function call times and a function call order. Therefore, it may be inferred that the dynamic library file may include a plurality of objective function segment sequences, and functions corresponding to each objective function segment sequence are from at least two function libraries.

Based on the first aspect or the first possible implementation, in a third possible implementation, after a program tracing file is obtained, a call graph is generated based on the program tracing file. A second function segment sequence is determined based on the call graph. A linker script is created based on sequence information of a first function segment sequence and sequence information of the second function segment sequence. This provides another method for creating the linker script.

Based on the first aspect or the first possible implementation, in a fourth possible implementation, before the loading script is obtained based on the starting program instruction, the method further includes: after a program tracing file is obtained, generating a call graph based on the program tracing file, determining, based on the call graph, a first function segment sequence including the first function segment and the second function segment, allocating an address offset to each function segment in the first function segment sequence, and creating the loading script based on the address offset of each function segment in the first function segment sequence. The call graph includes a function call order and a quantity of function call times. This provides a method for creating the loading script.

Based on the fourth possible implementation, in a fifth possible implementation, after the call graph is generated based on the program tracing file, a plurality of objective functions are selected from the call graph. An address offset is allocated to an objective function segment corresponding to the objective function. The loading script is created based on the address offset of each function segment in the first function segment sequence and the address offset of the objective function segment. Any two of the plurality of objective functions do not have a function call relationship, and a quantity of times that each objective function is called is greater than or equal to a preset threshold. The objective function segment is in a one-to-one correspondence with a cache set mapping bit included in the address offset of the objective function segment. The cache set mapping bit is used to map a cache set. The objective function segment may be understood as a hot function segment that does not have a call relationship with another hot function. Therefore, hot function segments that do not have a call relationship may be loaded to different cache sets, so that a cache conflict is reduced and a cache hit rate is improved.

Based on the first aspect or the first possible implementation, in a sixth possible but not claimed as such implementation, before the loading script is obtained based on the starting program instruction, the method further includes: after a program tracing file is obtained, generating a call graph based on the program tracing file, determining, based on the call graph, a first function segment sequence and a second function segment sequence, allocating an address offset to each function segment in the first function segment sequence and the second function segment sequence, and creating the loading script based on the address offset of each function segment in the first function segment sequence and the address offset of each function segment in the second function segment sequence. This provides another method for creating the loading script.

According to a second aspect according to the invention, the invention also provides the following network device. The network device includes a receiving unit, a loading unit, and a processing unit. The receiving unit is configured to receive a starting program instruction. The loading unit is configured to: obtain a loading script based on the starting program instruction, and load, based on the loading script, a dynamic library file including a first function segment and a second function segment to a memory. The processing unit is configured to execute the first function segment and prefetch the second function segment from the memory. The loading script includes an address offset of the first function segment and an address offset of the second function segment. A function corresponding to the first function segment and a function corresponding to the second function segment are from different function libraries. A quantity of times that the first function segment calls the second function segment is greater than a quantity of times that the first function segment calls another function segment. The address offset of the second function segment is a sum of a size of the address offset of the first function segment and a size of a storage space of the first function segment. The network device can place, based on a quantity of function call times, function segments corresponding to different function libraries at adjacent locations in the memory, so that a hit rate for prefetching an inter-library function segment is improved.

In a first possible implementation of the second aspect, the loading script further includes an address offset of a third function segment and an address offset of a fourth function segment, and the dynamic library file further includes the third function segment and the fourth function segment. The processing unit is further configured to execute the third function segment and prefetch the fourth function segment from the memory. A function corresponding to the third function segment and a function corresponding to the fourth function segment are from a same function library. A quantity of times that the third function segment calls the fourth function segment is greater than a quantity of times that the third function segment calls another function segment. The address offset of the fourth function segment is a sum of a size of the address offset of the third function segment and a size of a storage space of the third function segment. Such a network device cannot only improve a hit rate for prefetching an inter-library function segment, but also improve a hit rate for prefetching an intra-library function segment.

In a second possible implementation, the processing unit is further configured to: obtain a program tracing file, generate a call graph based on the program tracing file, determine, based on the call graph, a first function segment sequence including the first function segment and the second function segment, and create a linker script based on sequence information of the first function segment sequence. The network device further includes a compilation unit and a linker unit. The compilation unit is configured to compile a program into a plurality of function segments. The linker unit is configured to obtain the first function segment sequence from the plurality of function segments based on the linker script, and generate a dynamic library file including the first function segment sequence. The call graph includes a function call order and a quantity of function call times. The linker script includes the sequence information of the first function segment sequence. The sequence information includes a sequence identifier, a function segment identifier in the sequence, and a function segment order. The network device may create the dynamic library file including the function segment sequence.

In a third possible implementation, the processing unit is further configured to: obtain a program tracing file, generate a call graph based on the program tracing file, determine, based on the call graph, a first function segment sequence including the first function segment and the second function segment, allocate an address offset to each function segment in the first function segment sequence, and create the loading script based on an identifier and the address offset of each function segment in the first function segment sequence. The call graph includes a function call order and a quantity of function call times. The network device may rearrange an address offset of the inter-library function segment, and create a loading file based on the rearranged address offset.

In a fourth possible implementation, the processing unit is further configured to: select a plurality of objective functions from the call graph, allocate an address offset to an objective function segment corresponding to the objective function, and create the loading script based on the address offset of each function segment in the first function segment sequence and the address offset of the objective function segment. Any two of the plurality of objective functions do not have a function call relationship, and a quantity of times that each objective function is called is greater than or equal to a preset threshold. The objective function segment is in a one-to-one correspondence with a cache set mapping bit included in the address offset of the objective function segment. The network device may map hot functions that do not have a call relationship to different cache sets, so that a cache conflict is reduced and a cache hit rate is improved.

According to a third but not claimed aspect, a network device is provided, including a processor and a memory. The memory is configured to store a program. The processor executes the program to implement the method according to the first aspect.

According to a fourth aspect, a computer-readable storage medium is provided. The computer-readable storage medium stores instructions. When the instructions are run on a computer, the computer is enabled to perform the method according to the first aspect.

According to a fifth aspect according to the invention, the invention also provides a computer program product including instructions. When the computer program product is run on a computer, the computer is enabled to perform the method according to the first aspect.

According to a sixth but not claimed aspect, a chip system is provided, including at least one processor. The processor is coupled to a memory. The memory is configured to store a computer program or instructions. The processor is configured to execute the computer program or the instructions to implement the method according to the first aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a cache miss scenario in the conventional technology;
FIG. 2 is a schematic diagram of a cache hit scenario according to an embodiment of this application;
FIG. 3 is a schematic diagram of a method for prefetching a function segment according to an embodiment of this application;
FIG. 4 is a flowchart of creating a dynamic library file according to an embodiment of this application;
FIG. 5 is a flowchart of creating a loading script according to an embodiment of this application;
FIG. 6 is a schematic diagram of creating a dynamic library file according to an embodiment of this application;
FIG. 7 is a flowchart of a method for prefetching a function segment according to an embodiment of this application;
FIG. 8 is a schematic diagram of creating a dynamic library file and a loading script according to an embodiment of this application;
FIG. 9 is another flowchart of a method for prefetching a function segment according to an embodiment of this application;
FIG. 10 is a diagram of a structure of a network device according to an embodiment of this application; and
FIG. 11 is a diagram of another structure of a network device according to an embodiment of this application.

### DESCRIPTION OF EMBODIMENTS

A method for prefetching a function segment in this application may be applied to a network device. The network device may be but is not limited to a base station or a baseband unit. The network device includes a plurality of levels of caches, for example, an L1 cache, an L2 cache, and an L3 cache. The L1 cache is a cache with a fastest read/write speed in a processor, and can improve a throughput speed of an instruction or data. The L1 cache includes an instruction cache and a data cache. The function segment in this application may be considered as an instruction. The method for prefetching the function segment in this application may optimize instruction reading in the instruction cache.

In some embedded multi-core scenarios, each core may run a micro operating system instance, and various services are executed on the micro operating system instance. Processes on these cores may share a memory layout of a service component function library. How to arrange the memory of the service component function library affects service execution performance of a plurality of cores. When an instruction or data is prefetched, in an example, a time overhead for hitting an L1 cache is 0.5 nanosecond (ns), a time overhead for reading an instruction or data from an L2 cache is 7 ns, and a time overhead for reading an instruction or data from the memory is 100 ns. Therefore, a time overhead of a single core for hitting a cache is low, and a lot of time can be reduced when the plurality of cores run a program.

A program needs to be compiled, linked, and loaded. A plurality of embedded programs are periodic, and execution paths of the program are the same in different task periods. Therefore, in a process of linking and loading an embedded program, a function segment in a binary file may be carefully arranged, and the function segment is placed in a specified location in the memory. This helps reduce a case in which an instruction does not hit a cache in a service execution process, so that end-to-end service performance is improved.

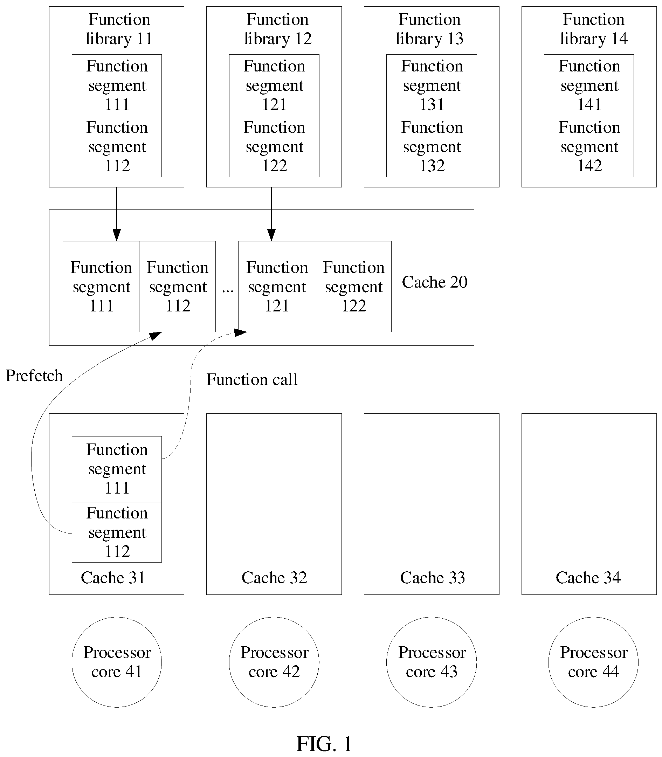

The following describes a process of prefetching a function segment. Refer to FIG. 1. In an embodiment, a network device includes a processing core 41, a processing core 42, a processing core 43, and a processing core 44. Each processing core has a corresponding L1 cache. For example, an L1 cache of the processing core 41 is a cache 31, an L1 cache of the processing core 42 is a cache 32, an L1 cache of the processing core 43 is a cache 33, and an L1 cache of the processing core 44 is a cache 34. An L2 cache shared by a plurality of processors is a cache 20.

Function libraries of a program 1 include a function library 11, a function library 12, a function library 13, and a function library 14. Each function library includes a plurality of function segments, and each function segment is obtained by compiling one function. For example, the function library 11 includes a function segment 111 and a function segment 112, the function library 12 includes a function segment 121 and a function segment 122, the function library 13 includes a function segment 131 and a function segment 132, and the function library 14 includes a function segment 141 and a function segment 142. It should be understood that a quantity of function segments included in the function library is not limited to 2, and may be specifically set based on an actual situation.

In a process of running the program, the function library 11 and the function library 12 of the program are first loaded to the cache 20. In the cache 20, function segments of each function library file are sequentially arranged. When the function segment 111 is executed, a next function segment of the function segment 111 needs to be prefetched, so that an instruction is executed in a pipeline manner. In the program 1, a next function segment of the function segment 111 is the function segment 112, but a function segment called by the function segment 111 is the function segment 121. The network device may prefetch the function segment 112 to the cache 31, but a function segment that actually needs to be executed after the function segment 111 is executed is the function segment 121. As a result, a cache is not hit, that is, a cache miss occurs.

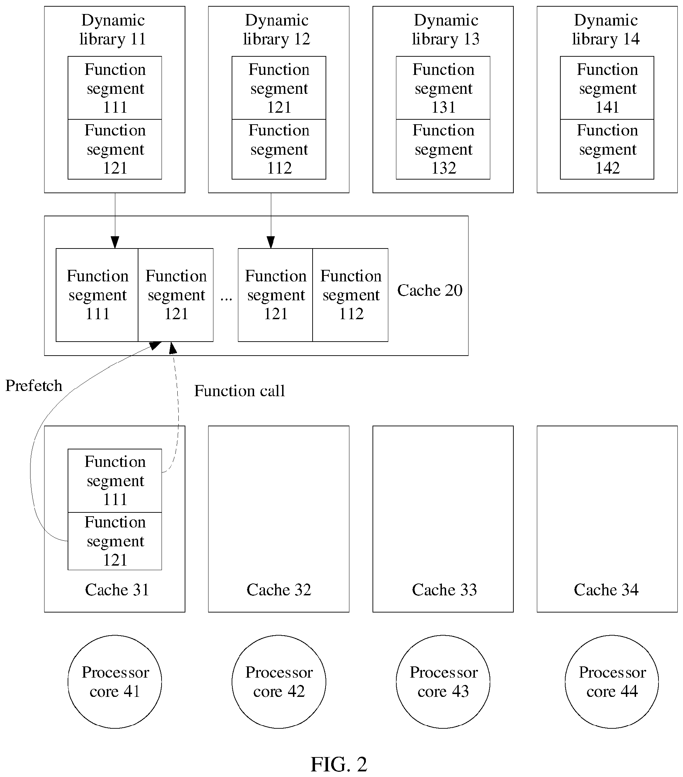

Refer to FIG. 2. In another example, the function segments of the function library are rearranged into dynamic libraries. Dynamic libraries of the program 1 include a dynamic library 11, a dynamic library 12, a dynamic library 13, and a dynamic library 14. The dynamic library 11 includes a function segment 111 and a function segment 121, the dynamic library 12 includes a function segment 121 and a function segment 112, the dynamic library 13 includes a function segment 131 and a function segment 132, and the dynamic library 14 includes a function segment 141 and a function segment 142.

In the program 1, a next function segment of the function segment 111 is the function segment 121. The network device may prefetch the function segment 121 to the cache 31, and executes the function segment 121 after the function segment 111 is executed. That is, the cache is hit.

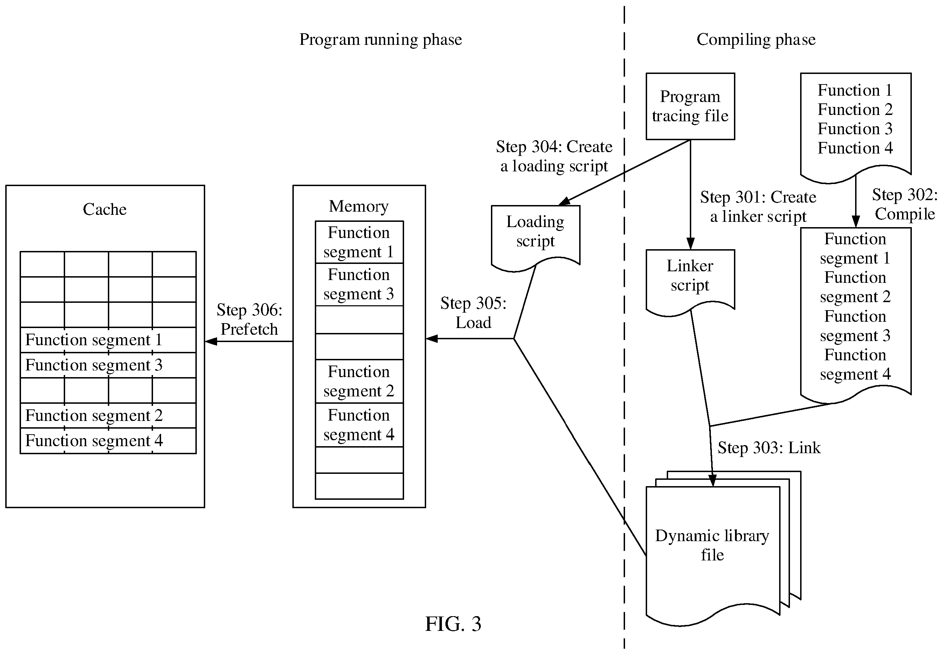

The following describes a method for prefetching a function segment in this application. Refer to FIG. 3. In an embodiment, the method includes the following steps.

Step 301: Create a linker script based on a program tracing file.

Step 302: Compile a program into a plurality of function segments.

Step 303: Link the plurality of function segments into a dynamic library file based on the linker script.

Step 304: Create a loading script based on the program tracing file.

The loading script includes a function segment identifier and an address offset of the function segment. The address offset of the function segment may be considered as an address of the function segment. Step 304 may be performed before step 301, or step 301 and step 304 may be performed concurrently.

Step 305: Load the dynamic library file to a memory based on the loading script.

Step 306: Prefetch the function segment in the memory to a cache.

In this embodiment, the linker script includes one or more function segment sequence identifiers, and a function segment identifier and a function segment order in each function segment sequence. The linker script corresponds to the dynamic library file function. All function segments may be divided into several function segment sets based on the linker script. Some function segment sets are function segment sequences. After the function segment in the function segment sequence is loaded to the memory based on the loading script, the function segments are sequentially arranged in the memory. In this way, prefetching may be performed based on a function segment order of the loading script. When the function segment order of the loading script is close to or consistent with an actual execution order of the function, a hit rate for prefetching is high.

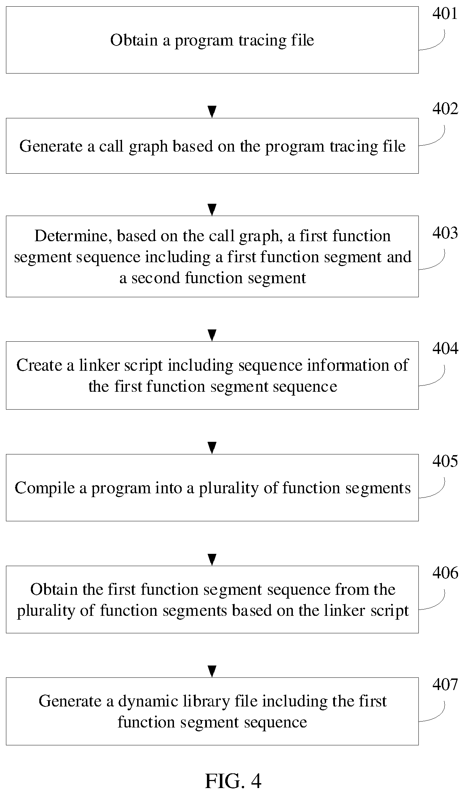

The following describes processes of generating the linker script, the dynamic library file, and the loading script. First, methods for creating the linker script and the dynamic library file are described in detail. Refer to FIG. 4. In an embodiment, a method for creating the dynamic library file in this application includes the following steps.

Step 401: Obtain a program tracing file.

Step 402: Generate a call graph based on the program tracing file.

The program tracing file includes a call relationship of a function. The call graph may be determined based on the program tracing file. The call graph includes a function call order and a quantity of function call times. This application relates to different function libraries. Therefore, the call graph includes a call relationship and a quantity of function call times between functions in different function libraries.

Step 403: Determine, based on the call graph, a first function segment sequence including a first function segment and a second function segment.

Specifically, clustering processing is performed on the call graph based on the function call order and the quantity of function call times, to obtain one or more function sets. Some function segment sets are function segment sequences. The first function segment sequence is used as an example. The first function segment sequence includes but is not limited to the first function segment and the second function segment. A function corresponding to the first function segment and a function corresponding to the second function segment are from different function libraries. Therefore, the first function segment and the second function segment may be considered as a pair of objective inter-library function segments. A pair of objective inter-library function segments includes two function segments from different function libraries, and a quantity of times that a previous function segment calls a next function segment is greater than a quantity of times that the previous function segment calls another function segment. The first function segment is a first function segment of any pair of objective inter-library function segments in the first function segment sequence. A quantity of times that the first function segment calls the second function segment is greater than a quantity of times that the first function segment calls another function segment.

Step 404: Create the linker script including sequence information of the first function segment sequence. The sequence information includes a sequence identifier, and a function segment identifier and a function segment order in the sequence.

Step 405: Compile a program into a plurality of function segments.

Step 406: Obtain the first function segment sequence from the plurality of function segments based on the linker script.

The linker script includes the sequence information of the first function segment sequence. The function segment of the first function segment sequence may be found in all function segments based on the sequence information, and the first function segment sequence is constructed based on the found function segment.

Step 407: Generate a dynamic library file including the first function segment sequence.

In this embodiment, according to the foregoing method, function segments corresponding to different function libraries may be rearranged, to obtain the dynamic library file. When the dynamic library file is loaded, the first function segment and the second function segment are enabled to be consecutively arranged in the memory. Because a quantity of times that the first function segment calls the second function segment is greater than a quantity of times that the first function segment calls another function segment, a hit rate for prefetching can be improved.

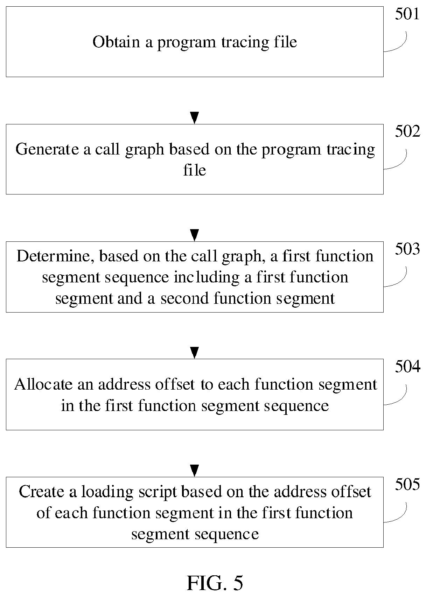

The following describes a method for creating the loading script in detail. Refer to FIG. 5. In another embodiment, the method for creating the loading script in this application includes the following steps.

Step 501: Obtain a program tracing file.

Step 502: Generate a call graph based on the program tracing file. The call graph includes a function call order and a quantity of function call times.

Step 503: Determine, based on the call graph, a first function segment sequence including a first function segment and a second function segment.

Step 501, step 502, and step 503 are respectively similar to step 401, step 402, and step 403.

Step 504: Allocate an address offset to each function segment in the first function segment sequence.

In this application, address offsets of the function segments in the function segment sequence are consecutively arranged based on the function segment order.

Step 505: Create the loading script based on the address offset of each function segment in the first function segment sequence. Optionally, the loading script includes an identifier of each function segment and an address offset of each function segment that are in the first function segment sequence.

In this embodiment, in the first function segment sequence, the address offsets of the function segments are consecutively arranged based on the function segment order, and a quantity of call times between function segments is the highest. Therefore, a hit rate is the highest when a next function segment is prefetched, and the loading script can improve a hit rate for prefetching.

In an optional embodiment, the method further includes: selecting a plurality of objective functions from the call graph, where any two of the plurality of objective functions do not have a function call relationship, and a quantity of times that each objective function is called is greater than or equal to a preset threshold; and allocating an address offset to an objective function segment corresponding to the objective function; and
the creating the loading script based on the address offset of each function segment in the first function segment sequence includes: creating the loading script based on the address offset of each function segment in the first function segment sequence and the address offset of the objective function segment.

The objective function segment is in a one-to-one correspondence with a cache set mapping bit included in the address offset of the objective function segment. The cache set mapping bit is in a one-to-one correspondence with a cache set. In an optional embodiment, a length of the address offset is 32 bits, and cache set mapping bits occupy last 12 bits of the address offset. It should be understood that a bit number of the cache set mapping bits is related to a cache size of the network device, and may be specifically set based on an actual situation. A location of the cache set mapping bit in the address offset and the preset threshold may also be set based on an actual situation.

In this embodiment, hot functions may be selected from the call graph based on a quantity of times of being called and the preset threshold, and then the objective function is selected from the hot functions based on the function call relationship. The address offset is allocated to the objective function segment, and each objective function segment is enabled to have a unique cache set mapping bit. In this way, a plurality of objective function segments may be mapped to different cache sets. In the conventional technology, hot functions may occupy a same cache set in turn. In this way, a frequent replacement of function segments in the cache set causes a low probability that a cache is hit. According to the foregoing method, hot functions that do not have a call relationship are enabled to be mapped to different cache sets, so that a cache conflict is reduced and a cache hit rate is improved.

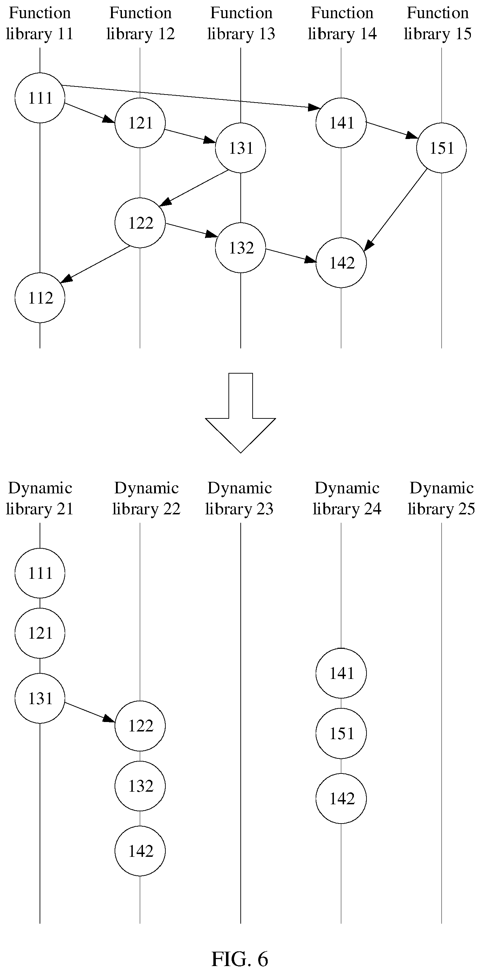

The following describes the method for creating the dynamic library file and the method for creating the loading script in this application by using an application scenario. Refer to FIG. 6. A function library of a program includes a function library 11, a function library 12, a function library 13, a function library 14, and a function library 15. The function library 11 includes a function 111 and a function 112, the function library 12 includes a function 121 and a function 122, the function library 13 includes a function 131 and a function 132, the function library 14 includes a function 141 and a function 142, and the function library 15 includes a function 151.

For example, a function call relationship and a quantity of function call times in a program tracing file are shown in Table 1.

**Table 1**

| Function | Called function | Quantity of function call times |
|---|---|---|
| 111 | 121 | 10 |
| 121 | 131 | 10 |
| 131 | 122 | 4 |
| 122 | 132 | 9 |
| 132 | 142 | 9 |
| 111 | 141 | 3 |
| 141 | 151 | 7 |
| 151 | 142 | 7 |
| 122 | 112 | 2 |

Function segments are classified by using a function call order and the quantity of function call times, to obtain a first function sequence, a second function sequence, a third function sequence, a fourth function sequence, and a fifth function sequence. The first function sequence includes the function 111, the function 121, and the function 131. The second function sequence includes the function 122, the function 132, and the function 142. The third function sequence includes the function 141, the function 151, and the function 142. The fourth function sequence includes the function 111 and the function 141. The fifth function sequence includes the function 131 and the function 122. A sixth function sequence includes the function 122 and the function 112.

A function sequence with a large quantity of function call times is selected from the function sequences, and a dynamic library is generated by using the selected function sequence. Refer to FIG. 6. For example, a dynamic library 21 including the function 111, the function 121, and the function 131 is generated. A dynamic library 22 including the function 122, the function 132, and the function 142 is created. A dynamic library 24 including the function 141, the function 151, and the function 142 is created. Consecutive address offsets are allocated to a plurality of function segments in each function sequence, and then the loading script is created based on a function segment identifier and the address offset of the function segment.

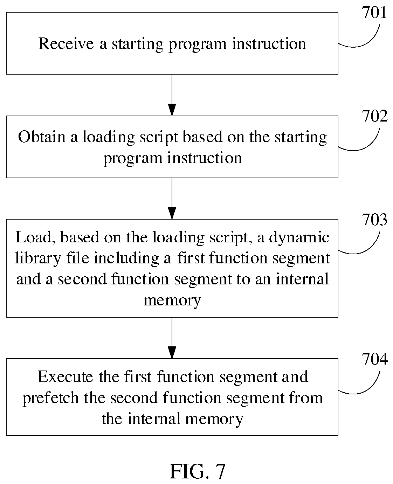

The method for prefetching the function segment in this application may be executed based on the foregoing dynamic library file and the loading script. Refer to FIG. 7. An embodiment of the method for prefetching the function segment in this application includes the following steps.

Step 701: Receive a starting program instruction.

Step 702: Obtain a loading script based on the starting program instruction.

The loading script includes an address offset of a first function segment and an address offset of a second function segment. It should be understood that the loading script includes function segment identifiers corresponding to all functions in a program, and the function segment identifiers included in the loading script is in a one-to-one correspondence with functions included in the program.

Step 703: Load, based on the loading script, a dynamic library file including the first function segment and the second function segment to a memory.

A function corresponding to the first function segment and a function corresponding to the second function segment are from different function libraries. A quantity of times that the first function segment calls the second function segment is greater than a quantity of times that the first function segment calls another function segment. The address offset of the second function segment is a sum of a size of the address offset of the first function segment and a size of a storage space of the first function segment.

Step 704: Execute the first function segment and prefetch the second function segment from the memory.

In this embodiment, the quantity of times that the first function segment calls the second function segment is greater than the quantity of times that the first function segment calls another function segment, and a hit rate for prefetching the second function segment is highest when the first function segment is executed. Similarly, according to the method, when other inter-library function segments that are called a largest quantity of times are adjacently arranged in the memory in this application, a hit rate for prefetching the other inter-library function segments is also highest.

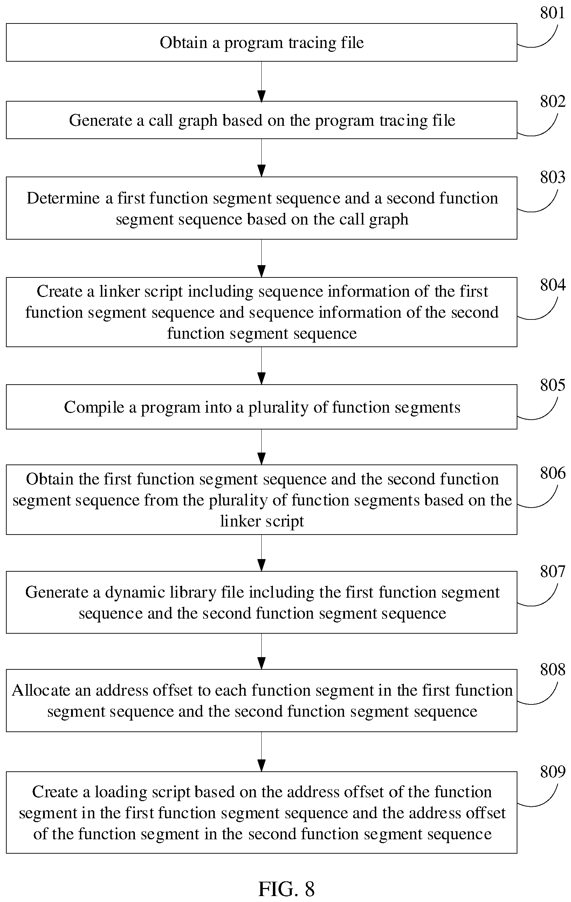

In addition to the inter-library function segment, this application can further improve a hit rate for prefetching an intra-library function segment. First, the processes of creating the linker script, the dynamic library file, and the loading script are described. Refer to FIG. 8. In another embodiment, the foregoing method for prefetching the function segment includes the following steps.

Step 801: Obtain a program tracing file.

Step 802: Generate a call graph based on the program tracing file.

Step 803: Determine a first function segment sequence and a second function segment sequence based on the call graph.

Step 804: Create a linker script including sequence information of the first function segment sequence and sequence information of the second function segment sequence.

Step 805: Compile a program into a plurality of function segments.

Step 806: Obtain the first function segment sequence and the second function segment sequence from the plurality of function segments based on the linker script.

Step 807: Generate a dynamic library file including the first function segment sequence and the second function segment sequence.

For the first function segment sequence, refer to the first function segment sequence in embodiments in FIG. 4. The second function segment sequence includes but is not limited to a third function segment and a fourth function segment. A function corresponding to the third function segment and a function corresponding to the fourth function segment are from a same function library. A quantity of times that the third function segment calls the fourth function segment is greater than a quantity of times that the third function segment calls another function segment. An address offset of the fourth function segment is a sum of a size of an address offset of the third function segment and a size of a storage space of the third function segment. The second function segment sequence is a function segment sequence that is in the dynamic library file and that includes any pair of objective intra-library function segments. A pair of objective intra-library function segments includes two function segments from a same function library, and a quantity of times that a previous function segment calls a next function segment is greater than a quantity of times that the previous function segment calls another function segment. The third function segment is a first function segment of any pair of objective intra-library function segments in the second function segment sequence.

Step 808: Allocate an address offset to each function segment in the first function segment sequence and the second function segment sequence.

Step 809: Create the loading script based on the address offset of the function segment in the first function segment sequence and the address offset of the function segment in the second function segment sequence.

The loading script includes the address offset of each function segment in the first function segment sequence and the address offset of each function segment in the second function segment sequence. Step 808 and step 809 are a process of creating the loading script, and step 804 to step 807 are a process of creating the dynamic library file. The foregoing two processes are independent, and there is no fixed execution order.

In this embodiment, address offsets of inter-library function segments or intra-library function segments that are called a largest quantity of times are consecutively arranged. Compared with a case in which function segments with a low quantity of call times are consecutively arranged, the loading script in this application can improve a hit rate for prefetching.

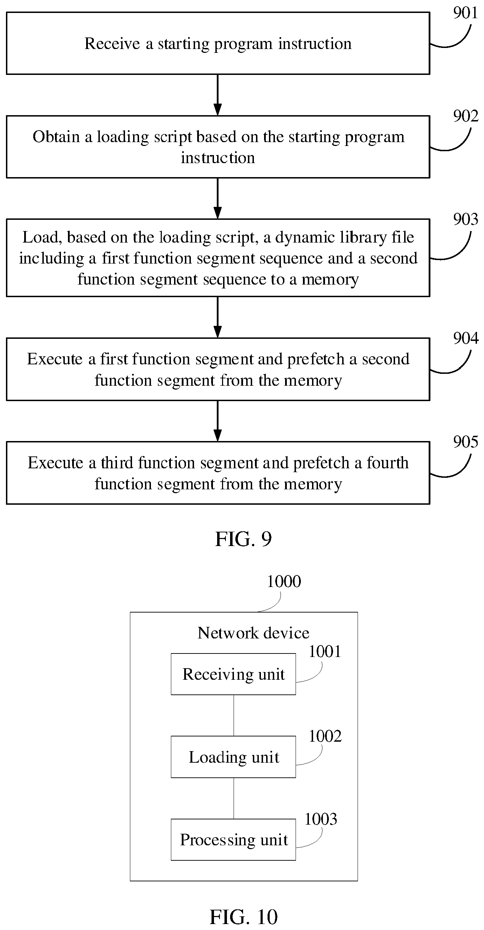

Based on the foregoing dynamic library file and loading script, the intra-library function segment may be prefetched. Refer to FIG. 9. Another embodiment of the method for prefetching the function segment in this application includes the following steps.

Step 901: Receive a starting program instruction.

Step 902: Obtain a loading script based on the starting program instruction.

Step 903: Load, based on the loading script, a dynamic library file including a first function segment sequence and a second function segment sequence to a memory.

Step 904: Execute a first function segment and prefetch a second function segment from the memory.

Step 905: Execute a third function segment and prefetch a fourth function segment from the memory. It should be noted that an execution order of the first function segment, the second function segment, the third function segment, and the fourth function segment is consistent with a function call order in a program. When the third function segment and the fourth function segment are executed before the first function segment and the second function segment, step 905 is performed before step 904.

In this embodiment, in the second function segment sequence, a quantity of times that the third function segment calls the fourth function segment is greater than a quantity of times that the third function segment calls another function segment, and a hit rate for prefetching the fourth function segment is highest when the third function segment is executed. Similarly, a hit rate for prefetching another intra-library function segment is also highest. In this method, hit rates for prefetching the inter-library function segment and the intra-library function segment may be highest, therefore processing efficiency of an entire program can be improved.

This application provides a network device that can implement the method in the foregoing embodiments. Refer to FIG. 10. In an embodiment, a network device 1000 in this application includes:
a receiving unit 1001, configured to receive a starting program instruction;
a loading unit 1002, configured to obtain a loading script based on the starting program instruction, where the loading script includes an address offset of a first function segment and an address offset of a second function segment, the address offset of the second function segment is a sum of a size of the address offset of the first function segment and a size of a storage space of the first function segment, a function corresponding to the first function segment and a function corresponding to the second function segment are from different function libraries, and a quantity of times that the first function segment calls the second function segment is greater than a quantity of times that the first function segment calls another function segment; and
the loading unit 1002 is further configured to load, based on the loading script, a dynamic library file including the first function segment and the second function segment to a memory; and
a processing unit 1003, configured to execute the first function segment and prefetch the second function segment from the memory.

In an optional embodiment, the loading script further includes an address offset of a third function segment and an address offset of a fourth function segment. The address offset of the fourth function segment is a sum of a size of the address offset of the third function segment and a size of a storage space of the third function segment. A function corresponding to the third function segment and a function corresponding to the fourth function segment are from a same function library. A quantity of times that the third function segment calls the fourth function segment is greater than a quantity of times that the third function segment calls another function segment. The dynamic library file further includes the third function segment and the fourth function segment.

The processing unit 1003 is further configured to execute the third function segment and prefetch the fourth function segment from the memory.

In another optional embodiment, the processing unit 1003 is further configured to: obtain a program tracing file, create a call graph based on the program tracing file, where the call graph includes a function call order and a quantity of function call times, determine, based on the call graph, a first function segment sequence including the first function segment and the second function segment, and create a linker script based on sequence information of the first function segment sequence, where the sequence information includes a sequence identifier, a function segment identifier in the sequence, and a function segment order.

The network device 1000 further includes:
a compilation unit, configured to compile a program into a plurality of function segments; and
a linker unit, configured to: obtain the first function segment sequence from the plurality of function segments based on the linker script, and create the dynamic library file including the first function segment sequence.

In another optional embodiment, the processing unit 1003 is further configured to: obtain a program tracing file, generate a call graph based on the program tracing file, where the call graph includes a function call order and a quantity of function call times, determine, based on the call graph, a first function segment sequence, allocate an address offset to each function segment in the first function segment sequence, and create the loading script based on the address offset of each function segment in the first function segment sequence.

In another optional embodiment, the processing unit 1003 is further configured to: select a plurality of objective functions from the call graph, where any two of the plurality of objective functions do not have a function call relationship, and a quantity of times that each objective function is called is greater than or equal to a preset threshold, allocate an address offset to an objective function segment corresponding to the objective function, where the objective function segment is in a one-to-one correspondence with a cache set mapping bit included in the address offset, and create the loading script based on the address offset of each function segment in the first function segment sequence and the address offset of the objective function segment.

It should be noted that because content such as information exchange between the modules/units of the apparatus and the execution processes thereof is based on a same idea as the method embodiment of this application, technical effects brought are the same as those of the method embodiments of this application. For specific content, refer to the descriptions in the foregoing method embodiments of this application. Details are not described herein again.

The network device in embodiments shown in FIG. 10 can perform the method according to any one of embodiments shown in FIG. 3, FIG. 4, FIG. 5, FIG. 7, FIG. 8, and FIG. 9. For terms, steps performed by the units, and beneficial effects in embodiments shown in FIG. 10, refer to corresponding descriptions in embodiments shown in FIG. 3 to FIG. 9.

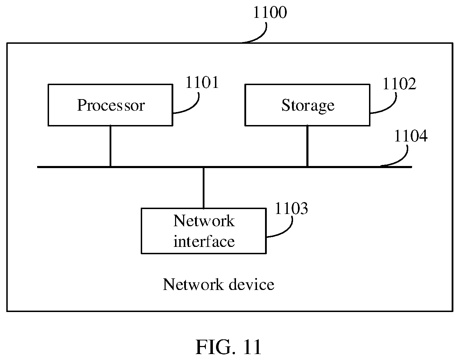

The following describes a network device in this application from a perspective of a hardware apparatus. Refer to FIG. 11. An embodiment of a network device 1100 in this application includes: a processor 1101, a storage 1102, and a network interface 1103 that are connected by using a bus 1104.

In this embodiment, the storage 1102 is configured to store information such as a program, instructions, or data. The program or the instructions stored in the storage 1102 are invoked, so that the processor 1101 is configured to perform the methods in embodiments shown in FIG. 3 to FIG. 9.

It should be understood that, the processor 1101 in this embodiment may be a central processing unit (CPU). The processor may be further another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor, or the like.

It may be understood that the storage 1102 mentioned in embodiments of this application may be a volatile memory or a non-volatile memory, or may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and is used as an external cache. As an example description rather than a limitative description, many forms of RAMs are available, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM), and a direct rambus random access memory (DRRAM).

The network interface 1103 may be configured to receive data or send data.

This application provides a computer-readable storage medium. The computer-readable storage medium stores a computer program. When the computer program is run on a computer, the computer is enabled to perform the communication method in the foregoing embodiments or the optional embodiments.

This application further provides a computer program product. When the computer program product is run on a computer, the computer is enabled to perform the communication method in the foregoing embodiments or the optional embodiments.

This application further provides a chip system. The chip system includes a processor and a storage that are coupled to each other. The storage is configured to store a computer program or instructions. The processing unit is configured to execute the computer program or the instructions stored in the storage, so that a network device performs the steps performed by the network device in the foregoing embodiments. Optionally, the storage is a memory in a chip, such as a register or a cache. The storage may alternatively be a memory that is located outside the chip and that is in the network device, such as a read-only memory (ROM), another type of static storage device that can store static information and instructions, or a random access memory (RAM). The processor mentioned anywhere above may be a general-purpose central processing unit, a microprocessor, an application-specific integrated circuit (ASIC), or one or more integrated circuits configured to implement the foregoing communication method.

In addition, it should be noted that the apparatus embodiments described above are merely an example. The units described as separate parts may or may not be physically separate, and parts displayed as units may or may not be physical units, may be located in one place, or may be distributed on a plurality of network units. Some or all of the modules may be selected based on an actual requirement, to achieve objectives of the solutions in embodiments. In addition, in the accompanying drawings of the apparatus embodiments provided in this application, a connection relationship between modules indicates that the modules have a communication connection with each other, and may be specifically implemented as one or more communication buses or signal cables.

Based on the descriptions of the foregoing implementations, a person skilled in the art may clearly understand that this application may be implemented by software in addition to necessary general-purpose hardware, or certainly may be implemented by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, some or all of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (SSD)), or the like.

## Claims

1. A computer-implemented method for prefetching a function segment (111, 112, 121, 122, 131, 132, 141, 142), comprising:
receiving (701) a starting program instruction;
obtaining (702) a loading script based on the starting program instruction, wherein the loading script comprises an address offset of a first function segment and an address offset of a second function segment, the address offset of the second function segment is equal to a sum of a size of the address offset of the first function segment and a size of a storage space of the first function segment, a function (111, 112, 121, 122, 131, 132, 141, 142, 151) corresponding to the first function segment and a function (111, 112, 121, 122, 131, 132, 141, 142, 151) corresponding to the second function segment are from different function (111, 112, 121, 122, 131, 132, 141, 142, 151) libraries, and a quantity of times that the first function segment calls the second function segment is greater than a quantity of times that the first function segment calls another function segment (111, 112, 121, 122, 131, 132, 141, 142);
loading (703), based on the loading script, a dynamic library file comprising the first function segment and the second function segment to a memory; and
executing (704) the first function segment and prefetching the second function segment from the memory.

2. The method according to claim 1, wherein the loading script further comprises an address offset of a third function segment and an address offset of a fourth function segment, a function (111, 112, 121, 122, 131, 132, 141, 142, 151) corresponding to the third function segment and a function (111, 112, 121, 122, 131, 132, 141, 142, 151) corresponding to the fourth function segment are from a same function library, a quantity of times that the third function segment calls the fourth function segment is greater than a quantity of times that the third function segment calls another function segment (111, 112, 121, 122, 131, 132, 141, 142), the address offset of the fourth function segment is equal to a sum of a size of the address offset of the third function segment and a size of a storage space of the third function segment, and the dynamic library file further comprises the third function segment and the fourth function segment; and
the method further comprises:
executing (905) the third function segment and prefetching (905) the fourth function segment from the memory.

3. The method according to claim 1 or 2, wherein before the receiving (701) a starting program instruction, the method further comprises:
obtaining (401) a program tracing file;
generating (402) a call graph based on the program tracing file, wherein the call graph comprises a function call order and a quantity of function (111, 112, 121, 122, 131, 132, 141, 142, 151) call times;
determining (403), based on the call graph, a first function segment sequence comprising the first function segment and the second function segment;
creating (404) a linker script based on sequence information of the first function segment sequence;
compiling (405) a program into a plurality of function segments (111, 112, 121, 122, 131, 132, 141, 142);
obtaining (406) the first function segment sequence from the plurality of function segments (111, 112, 121, 122, 131, 132, 141, 142) based on the linker script; and
generating (407) a dynamic library file comprising the first function segment sequence.

4. The method according to claim 1 or 2, wherein before the obtaining (702) a loading script based on the starting program instruction, the method further comprises:
obtaining (501) a program tracing file;
generating (502) a call graph based on the program tracing file, wherein the call graph comprises a function call order and a quantity of function (111, 112, 121, 122, 131, 132, 141, 142, 151) call times;
determining (503), based on the call graph, a first function segment sequence comprising the first function segment and the second function segment;
allocating (504) an address offset to each function segment (111, 112, 121, 122, 131, 132, 141, 142) in the first function segment sequence; and
creating (505) the loading script based on the address offset of each function segment (111, 112, 121, 122, 131, 132, 141, 142) in the first function segment sequence.

5. The method according to claim 4, further comprising:
selecting a plurality of objective functions from the call graph, wherein any two of the plurality of objective functions do not have a function call relationship, and a quantity of times that each objective function is called is greater than or equal to a preset threshold; and
allocating an address offset to an objective function segment corresponding to the objective function, wherein the objective function segment is in a one-to-one correspondence with a cache set mapping bit comprised in the address offset;
wherein the creating the loading script based on the address offset of each function segment (111, 112, 121, 122, 131, 132, 141, 142) in the first function segment sequence comprises:
creating (809) the loading script based on the address offset of each function segment (111, 112, 121, 122, 131, 132, 141, 142) in the first function segment sequence and the address offset of the objective function segment.

6. A network device (1000, 1100), comprising:
a receiving unit (1001), configured to receive (701) a starting program instruction;
a loading unit (1002), configured to obtain (702) a loading script based on the starting program instruction, wherein the loading script comprises an address offset of a first function segment and an address offset of a second function segment, the address offset of the second function segment is equal to a sum of a size of the address offset of the first function segment and a size of a storage space of the first function segment, a function (111, 112, 121, 122, 131, 132, 141, 142, 151) corresponding to the first function segment and a function (111, 112, 121, 122, 131, 132, 141, 142, 151) corresponding to the second function segment are from different function (111, 112, 121, 122, 131, 132, 141, 142, 151) libraries, and a quantity of times that the first function segment calls the second function segment is greater than a quantity of times that the first function segment calls another function segment (111, 112, 121, 122, 131, 132, 141, 142); and
the loading unit (1002) is further configured to load (703), based on the loading script, a dynamic library file comprising the first function segment and the second function segment to a memory; and
a processing unit (1003), configured to execute (704) the first function segment and prefetch the second function segment from the memory.

7. The network device (1000, 1100) according to claim 6, wherein the loading script further comprises an address offset of a third function segment and an address offset of a fourth function segment, the address offset of the fourth function segment is a sum of a size of the address offset of the third function segment and a size of a storage space of the third function segment, a function (111, 112, 121, 122, 131, 132, 141, 142, 151) corresponding to the third function segment and a function (111, 112, 121, 122, 131, 132, 141, 142, 151) corresponding to the fourth function segment are from a same function library, a quantity of times that the third function segment calls the fourth function segment is greater than a quantity of times that the third function segment calls another function segment (111, 112, 121, 122, 131, 132, 141, 142), and the dynamic library file further comprises the third function segment and the fourth function segment; and
the processing unit (1003) is further configured to execute (805) the third function segment and prefetch (905) the fourth function segment from the memory.

8. The network device (1000, 1100) according to claim 6 or 7, wherein
the processing unit (1003) is further configured to: obtain (401) a program tracing file, generate (402) a call graph based on the program tracing file, wherein the call graph comprises a function call order and a quantity of function (111, 112, 121, 122, 131, 132, 141, 142, 151) call times, determine (403), based on the call graph, a first function segment sequence comprising the first function segment and the second function segment, and create (404) a linker script based on sequence information of the first function segment sequence;
the network device (1000, 1100) further comprises:
a compilation unit, configured to compile (405) a program into a plurality of function segments (111, 112, 121, 122, 131, 132, 141, 142); and
a linker unit, configured to obtain (406) the first function segment sequence from the plurality of function segments (111, 112, 121, 122, 131, 132, 141, 142) based on the linker script; and
the linker unit is further configured to generate (407) a dynamic library file comprising the first function segment sequence.

9. The network device (1000, 1100) according to claim 6 or 7, wherein
the processing unit (1003) is further configured to: obtain (501) a program tracing file, generate (502) a call graph based on the program tracing file, wherein the call graph comprises a function call order and a quantity of function (111, 112, 121, 122, 131, 132, 141, 142, 151) call times, determine (503), based on the call graph, a first function segment sequence comprising the first function segment and the second function segment, allocate (504) an address offset to each function segment (111, 112, 121, 122, 131, 132, 141, 142) in the first function segment sequence, and create (505) the loading script based on the address offset of each function segment (111, 112, 121, 122, 131, 132, 141, 142) in the first function segment sequence.

10. The network device (1000, 1100) according to claim 9, wherein
the processing unit (1003) is further configured to: select a plurality of objective functions from the call graph, wherein any two of the plurality of objective functions do not have a function call relationship, and a quantity of times that each objective function is called is greater than or equal to a preset threshold, allocate an address offset to an objective function segment corresponding to the objective function, wherein the objective function segment is in a one-to-one correspondence with a cache set mapping bit comprised in the address offset, and create (809) the loading script based on the address offset of each function segment (111, 112, 121, 122, 131, 132, 141, 142) in the first function segment sequence and the address offset of the objective function segment.

11. A computer-readable storage medium, storing instructions, wherein when the instructions are run on a computer, the computer is enabled to perform the method according to any one of claims 1 to 5.

12. A computer program product including instructions, which when run on a computer, cause the computer to perform the method according to any one of claims 1 to 5.

## Patentansprüche

1. Computerimplementiertes Verfahren zum Vorabrufen eines Funktionssegments (111, 112, 121, 122, 131, 132, 141, 142), umfassend:
Empfangen (701) einer Startprogrammanweisung;
Erlangen (702) eines Ladescripts basierend auf der Startprogrammanweisung, wobei das Ladescript einen Adressversatz eines ersten Funktionssegments und einen Adressversatz eines zweiten Funktionssegments umfasst, wobei der Adressversatz des zweiten Funktionssegments gleich einer Summe aus einer Größe des Adressversatzes des ersten Funktionssegments und einer Größe eines Speicherplatzes des ersten Funktionssegments ist, eine Funktion (111, 112, 121, 122, 131, 132, 141, 142, 151) entsprechend dem ersten Funktionssegment und eine Funktion (111, 112, 121, 122, 131, 132, 141, 142, 151) entsprechend dem zweiten Funktionssegment aus Bibliotheken verschiedener Funktionen (111, 112, 121, 122, 131, 132, 141, 142, 151) stammen, und eine Anzahl der Male, die das erste Funktionssegment das zweite Funktionssegment aufruft, größer als eine Anzahl der Male ist, die das erste Funktionssegment ein anderes Funktionssegment (111, 112, 121, 122, 131, 132, 141, 142) aufruft;
Laden (703) einer dynamischen Bibliotheksdatei, umfassend das erste Funktionssegment und das zweite Funktionssegment, basierend auf dem Ladescript in einen Speicher; und
Ausführen (704) des ersten Funktionssegments und Vorabrufen des zweiten Funktionssegments aus dem Speicher.

2. Verfahren nach Anspruch 1, wobei das Ladescript ferner einen Adressversatz eines dritten Funktionssegments und einen Adressversatz eines vierten Funktionssegments umfasst, wobei eine Funktion (111, 112, 121, 122, 131, 132, 141, 142, 151) entsprechend dem dritten Funktionssegment und eine Funktion (111, 112, 121, 122, 131, 132, 141, 142, 151) entsprechend dem vierten Funktionssegment aus derselben Funktionsbibliothek stammen, eine Anzahl der Male, die das dritte Funktionssegment das vierte Funktionssegment aufruft, größer als eine Anzahl der Male ist, die das dritte Funktionssegment ein anderes Funktionssegment (111, 112, 121, 122, 131, 132, 141, 142) aufruft, der Adressversatz des vierten Funktionssegments gleich einer Summe aus einer Größe des Adressversatzes des dritten Funktionssegments und einer Größe eines Speicherplatzes des dritten Funktionssegments ist, und die dynamische Bibliotheksdatei ferner das dritte Funktionssegment und das vierte Funktionssegment umfasst; und
das Verfahren ferner Folgendes umfasst:
Ausführen (905) des dritten Funktionssegments und Vorabrufen (905) des vierten Funktionssegments aus dem Speicher.

3. Verfahren nach Anspruch 1 oder 2, wobei das Verfahren vor dem Empfangen (701) einer Startprogrammanweisung ferner Folgendes umfasst:
Erlangen (401) einer Programmverfolgungsdatei;
Generieren (402) eines Aufrufgraphen basierend auf der Programmverfolgungsdatei, wobei der Aufrufgraph eine Funktionsaufrufreihenfolge und eine Anzahl der Aufrufe der Funktion (111, 112, 121, 122, 131, 132, 141, 142, 151) umfasst;
Bestimmen (403) einer ersten Funktionssegmentsequenz, umfassend das erste Funktionssegment und das zweite Funktionssegment, basierend auf dem Aufrufgraphen;
Erstellen (404) eines Linker-Scripts basierend auf Sequenzinformationen der ersten Funktionssegmentsequenz;
Kompilieren (405) eines Programms in eine Vielzahl von Funktionssegmenten (111, 112, 121, 122, 131, 132, 141, 142);
Erlangen (406) der ersten Funktionssegmentsequenz aus der Vielzahl von Funktionssegmenten (111, 112, 121, 122, 131, 132, 141, 142) basierend auf dem Linker-Scripts; und
Generieren (407) einer dynamischen Bibliotheksdatei, umfassend die erste Funktionssegmentsequenz.

4. Verfahren nach Anspruch 1 oder 2, wobei das Verfahren vor dem Erlangen (702) eines Ladescripts basierend auf der Startprogrammanweisung ferner Folgendes umfasst:
Erlangen (501) einer Programmverfolgungsdatei;
Generieren (502) eines Aufrufgraphen basierend auf der Programmverfolgungsdatei, wobei der Aufrufgraph eine Funktionsaufrufreihenfolge und eine Anzahl der Aufrufe der Funktion (111, 112, 121, 122, 131, 132, 141, 142, 151) umfasst;
Bestimmen (503) einer ersten Funktionssegmentsequenz, umfassend das erste Funktionssegment und das zweite Funktionssegment, basierend auf dem Aufrufgraphen;
Zuweisen (504) eines Adressversatzes an jedes Funktionssegment (111, 112, 121, 122, 131, 132, 141, 142) in der ersten Funktionssegmentsequenz; und
Erstellen (505) des Ladescripts basierend auf dem Adressversatz jedes Funktionssegments (111, 112, 121, 122, 131, 132, 141, 142) in der ersten Funktionssegmentsequenz.

5. Verfahren nach Anspruch 4, ferner umfassend:
Auswählen einer Vielzahl von Zielfunktionen aus dem Aufrufgraphen, wobei zwei beliebige der Vielzahl von Zielfunktionen keine Funktionsaufrufbeziehung aufweisen, und einer Anzahl von Malen, die jede Zielfunktion aufgerufen wird, größer oder gleich einem voreingestellten Schwellenwert ist; und
Zuweisen eines Adressversatzes an ein Zielfunktionssegment entsprechend der Zielfunktion, wobei das Zielfunktionssegment in einer Eins-zu-Eins-Entsprechung mit einem Cache-Set-Zuordnungsbit steht, das in dem Adressversatz enthalten ist;
wobei das Erstellen des Ladescripts basierend auf dem Adressversatz jedes Funktionssegments (111, 112, 121, 122, 131, 132, 141, 142) in der ersten Funktionssegmentsequenz Folgendes umfasst:
Erstellen (809) des Ladescripts basierend auf dem Adressversatz jedes Funktionssegments (111, 112, 121, 122, 131, 132, 141, 142) in der ersten Funktionssegmentsequenz und dem Adressversatz des Zielfunktionssegments.

6. Netzwerkvorrichtung (1000, 1100), umfassend:
eine Empfangseinheit (1001), die dazu konfiguriert ist, eine Startprogrammanweisung (701) zu empfangen;
eine Ladeeinheit (1002), die dazu konfiguriert ist, ein Ladescript basierend auf der Startprogrammanweisung zu erlangen (702), wobei das Ladescript einen Adressversatz eines ersten Funktionssegments und einen Adressversatz eines zweiten Funktionssegments umfasst, wobei der Adressversatz des zweiten Funktionssegments gleich einer Summe aus einer Größe des Adressversatzes des ersten Funktionssegments und einer Größe eines Speicherplatzes des ersten Funktionssegments ist, eine Funktion (111, 112, 121, 122, 131, 132, 141, 142, 151) entsprechend dem ersten Funktionssegment und eine Funktion (111, 112, 121, 122, 131, 132, 141, 142, 151) entsprechend dem zweiten Funktionssegment aus Bibliotheken verschiedener Funktionen (111, 112, 121, 122, 131, 132, 141, 142, 151) stammen, und eine Anzahl der Male, die das erste Funktionssegment das zweite Funktionssegment aufruft, größer als eine Anzahl der Male ist, die das erste Funktionssegment ein anderes Funktionssegment (111, 112, 121, 122, 131, 132, 141, 142) aufruft; und
die Ladeeinheit (1002) ferner dazu konfiguriert ist, eine dynamische Bibliotheksdatei, umfassend das erste Funktionssegment und das zweite Funktionssegment, basierend auf dem Ladescript in einen Speicher zu laden (703); und
eine Verarbeitungseinheit (1003), die dazu konfiguriert ist, das erste Funktionssegment auszuführen (704) und das zweite Funktionssegment aus dem Speicher vorabzurufen.

7. Netzwerkvorrichtung (1000, 1100) nach Anspruch 6, wobei das Ladescript ferner einen Adressversatz eines dritten Funktionssegments und einen Adressversatz eines vierten Funktionssegments umfasst, der Adressversatz des vierten Funktionssegments eine Summe aus einer Größe des Adressversatzes des dritten Funktionssegments und einer Größe eines Speicherplatzes des dritten Funktionssegments ist, wobei eine Funktion (111, 112, 121, 122, 131, 132, 141, 142, 151) entsprechend dem dritten Funktionssegment und eine Funktion (111, 112, 121, 122, 131, 132, 141, 142, 151) entsprechend dem vierten Funktionssegment aus derselben Funktionsbibliothek stammen, eine Anzahl der Male, die das dritte Funktionssegment das vierte Funktionssegment aufruft, größer als eine Anzahl der Male ist, die das dritte Funktionssegment ein anderes Funktionssegment (111, 112, 121, 122, 131, 132, 141, 142) aufruft, und die dynamische Bibliotheksdatei ferner das dritte Funktionssegment und das vierte Funktionssegment umfasst; und die Verarbeitungseinheit (1003) ferner dazu konfiguriert ist, das dritte Funktionssegment auszuführen (805) und das vierte Funktionssegment aus dem Speicher vorabzurufen (905).

8. Netzwerkvorrichtung (1000, 1100) nach Anspruch 6 oder 7, wobei
die Verarbeitungseinheit (1003) ferner dazu konfiguriert ist:
eine Programmverfolgungsdatei zu erlangen (401), einen Aufrufgraphen basierend auf der Programmverfolgungsdatei zu generieren (402), wobei der Aufrufgraph eine Funktionsaufrufreihenfolge und eine Anzahl der Aufrufe der Funktion (111, 112, 121, 122, 131, 132, 141, 142, 151) umfasst, eine erste Funktionssegmentsequenz, umfassend das erste Funktionssegment und das zweite Funktionssegment, basierend auf dem Aufrufgraphen zu bestimmen (403) und ein Linker-Script basierend auf den Sequenzinformationen der ersten Funktionssegmentsequenz zu erstellen (404);
die Netzwerkvorrichtung (1000, 1100) ferner Folgendes umfasst:
eine Kompilierungseinheit, die dazu konfiguriert ist, ein Programm in eine Vielzahl von Funktionssegmenten (111, 112, 121, 122, 131, 132, 141, 142) zu kompilieren (405); und
eine Linker-Einheit, die dazu konfiguriert ist, die erste Funktionssegmentsequenz aus der Vielzahl von Funktionssegmenten (111, 112, 121, 122, 131, 132, 141, 142) basierend auf dem Linker-Script zu erlangen (406); und
die Linkereinheit ferner dazu konfiguriert ist, eine dynamische Bibliotheksdatei, umfassend die erste Funktionssegmentsequenz, zu generieren (407).

9. Netzwerkvorrichtung (1000, 1100) nach Anspruch 6 oder 7, wobei
die Verarbeitungseinheit (1003) ferner dazu konfiguriert ist:
eine Programmverfolgungsdatei zu erlangen (501), einen Aufrufgraphen basierend auf der Programmverfolgungsdatei zu generieren (502), wobei der Aufrufgraph eine Funktionsaufrufreihenfolge und eine Anzahl von Aufrufen der Funktion (111, 112, 121, 122, 131, 132, 141, 142, 151) umfasst,
eine erste Funktionssegmentsequenz, umfassend das erste Funktionssegment und das zweite Funktionssegment, basierend auf dem Aufrufgraphen zu bestimmen (503), jedem Funktionssegment (111, 112, 121, 122, 131, 132, 141, 142) in der ersten Funktionssegmentsequenz einen Adressversatz zuzuweisen (504) und das Ladescript basierend auf dem Adressversatz jedes Funktionssegments (111, 112, 121, 122, 131, 132, 141, 142) in der ersten Funktionssegmentsequenz zu erstellen (505).

10. Netzwerkvorrichtung (1000, 1100) nach Anspruch 9, wobei
die Verarbeitungseinheit (1003) dazu konfiguriert ist: eine Vielzahl von Zielfunktionen aus dem Aufrufgraphen auszuwählen, wobei beliebige zwei der Vielzahl von Zielfunktionen keine Funktionsaufrufbeziehung aufweisen, und eine Anzahl von Malen, die jede Zielfunktion aufgerufen wird, größer oder gleich einem voreingestellten Schwellenwert ist, einem Zielfunktionssegment entsprechend der Zielfunktion einen Adressversatz zuzuweisen, wobei das Zielfunktionssegment in einer Eins-zu-Eins-Entsprechung mit einem Cache-Set-Zuordnungsbit steht, das in dem Adressversatz enthalten ist, und das Ladescript basierend auf dem Adressversatz jedes Funktionssegments (111, 112, 121, 122, 131, 132, 141, 142) in der ersten Funktionssegmentsequenz und dem Adressversatz des Zielfunktionssegments zu erstellen (809).

11. Computerlesbares Speichermedium, das Anweisungen speichert, wobei, wenn die Anweisungen auf einem Computer ausgeführt werden, der Computer in die Lage versetzt wird, das Verfahren nach einem der Ansprüche 1 bis 5 durchzuführen.

12. Computerprogrammprodukt, beinhaltend Anweisungen, welche bei Ausführung auf einem Computer bewirken, dass der Computer das Verfahren nach einem der Ansprüche 1 bis 5 durchführt.

## Revendications

1. Procédé mis en œuvre par ordinateur de pré-extraction d'un segment de fonction (111, 112, 121, 122, 131, 132, 141, 142), comprenant :
la réception (701) d'une instruction de programme de démarrage ;
l'obtention (702) d'un script de chargement sur la base de l'instruction de programme de démarrage, dans lequel le script de chargement comprend un décalage d'adresse d'un premier segment de fonction et un décalage d'adresse d'un deuxième segment de fonction, le décalage d'adresse du deuxième segment de fonction est égal à une somme d'une taille du décalage d'adresse du premier segment de fonction et d'une taille d'un espace de stockage du premier segment de fonction, une fonction (111, 112, 121, 122, 131, 132, 141, 142, 151) correspondant au premier segment de fonction et une fonction (111, 112, 121, 122, 131, 132, 141, 142, 151) correspondant au deuxième segment de fonction proviennent de bibliothèques de fonctions (111, 112, 121, 122, 131, 132, 141, 142, 151) différentes, et une quantité de fois où le premier segment de fonction appelle le deuxième segment de fonction est supérieure à une quantité de fois où le premier segment de fonction appelle un autre segment de fonction (111, 112, 121, 122, 131, 132, 141, 142) ;
le chargement (703), sur la base du script de chargement, d'un fichier de bibliothèque dynamique comprenant le premier segment de fonction et le deuxième segment de fonction vers une mémoire ; et
l'exécution (704) du premier segment de fonction et la pré-extraction du deuxième segment de fonction à partir de la mémoire.

2. Procédé selon la revendication 1, dans lequel le script de chargement comprend également un décalage d'adresse d'un troisième segment de fonction et un décalage d'adresse d'un quatrième segment de fonction, une fonction (111, 112, 121, 122, 131, 132, 141, 142, 151) correspondant au troisième segment de fonction et une fonction (111, 112, 121, 122, 131, 132, 141, 142, 151) correspondant au quatrième segment de fonction proviennent d'une même bibliothèque de fonctions, une quantité de fois où le troisième segment de fonction appelle le quatrième segment de fonction est supérieure à une quantité de fois où le troisième segment de fonction appelle un autre segment de fonction (111, 112, 121, 122, 131, 132, 141, 142), le décalage d'adresse du quatrième segment de fonction est égal à une somme d'une taille du décalage d'adresse du troisième segment de fonction et d'une taille d'un espace de stockage du troisième segment de fonction, et le fichier de bibliothèque dynamique comprend également le troisième segment de fonction et le quatrième segment de fonction ; et
le procédé comprend également :
l'exécution (905) du troisième segment de fonction et la pré-extraction (905) du quatrième segment de fonction à partir de la mémoire.

3. Procédé selon la revendication 1 ou 2, dans lequel avant la réception (701) d'une instruction de programme de démarrage, le procédé comprend également :
l'obtention (401) d'un fichier de traçage de programme ;
la génération (402) d'un graphe d'appels sur la base du fichier de traçage de programme, dans lequel le graphe d'appels comprend un ordre d'appel de fonction et une quantité d'appels de fonction (111, 112, 121, 122, 131, 132, 141, 142, 151) ;
la détermination (403), sur la base du graphe d'appels, d'une première séquence de segment de fonction comprenant le premier segment de fonction et le deuxième segment de fonction ;
la création (404) d'un script de liaison sur la base d'informations de séquence de la première séquence de segment de fonction ;
la compilation (405) d'un programme en une pluralité de segments de fonction (111, 112, 121, 122, 131, 132, 141, 142) ;
l'obtention (406) de la première séquence de segment de fonction à partir de la pluralité de segments de fonction (111, 112, 121, 122, 131, 132, 141, 142) sur la base du script de liaison ; et la génération (407) d'un fichier de bibliothèque dynamique comprenant la première séquence de segment de fonction.

4. Procédé selon la revendication 1 ou 2, dans lequel avant l'obtention (702) d'un script de chargement sur la base de l'instruction de programme de démarrage, le procédé comprend également :
l'obtention (501) d'un fichier de traçage de programme ;
la génération (502) d'un graphe d'appels sur la base du fichier de traçage de programme, dans lequel le graphe d'appels comprend un ordre d'appel de fonction et une quantité d'appels de fonction (111, 112, 121, 122, 131, 132, 141, 142, 151) ;
la détermination (503), sur la base du graphe d'appels, d'une première séquence de segment de fonction comprenant le premier segment de fonction et le deuxième segment de fonction ;
l'attribution (504) d'un décalage d'adresse à chaque segment de fonction (111, 112, 121, 122, 131, 132, 141, 142) dans la première séquence de segment de fonction ; et
la création (505) du script de chargement sur la base du décalage d'adresse de chaque segment de fonction (111, 112, 121, 122, 131, 132, 141, 142) dans la première séquence de segment de fonction.

5. Procédé selon la revendication 4, comprenant également :
la sélection d'une pluralité de fonctions objectives à partir du graphe d'appels, dans lequel deux quelconques de la pluralité de fonctions objectives n'ont pas de relation d'appel de fonction, et une quantité de fois où chaque fonction objective est appelée est supérieure ou égale à un seuil prédéfini ; et
l'attribution d'un décalage d'adresse à un segment de fonction objective correspondant à la fonction objective, dans lequel le segment de fonction objective est en correspondance un à un avec un bit de mappage d'ensemble de cache compris dans le décalage d'adresse ;
dans lequel la création du script de chargement sur la base du décalage d'adresse de chaque segment de fonction (111, 112, 121, 122, 131, 132, 141, 142) dans la première séquence de segment de fonction comprend :
la création (809) du script de chargement sur la base du décalage d'adresse de chaque segment de fonction (111, 112, 121, 122, 131, 132, 141, 142) dans la première séquence de segment de fonction et le décalage d'adresse du segment de fonction objective.

6. Dispositif réseau (1000, 1100), comprenant :
une unité de réception (1001), configurée pour recevoir (701) une instruction de programme de démarrage ;
une unité de chargement (1002), configuré pour obtenir (702) un script de chargement sur la base de l'instruction de programme de démarrage, dans lequel le script de chargement comprend un décalage d'adresse d'un premier segment de fonction et un décalage d'adresse d'un deuxième segment de fonction, le décalage d'adresse du deuxième segment de fonction est égal à une somme d'une taille du décalage d'adresse du premier segment de fonction et d'une taille d'un espace de stockage du premier segment de fonction, une fonction (111, 112, 121, 122, 131, 132, 141, 142, 151) correspondant au premier segment de fonction et une fonction (111, 112, 121, 122, 131, 132, 141, 142, 151) correspondant au deuxième segment de fonction proviennent de bibliothèques de fonctions (111, 112, 121, 122, 131, 132, 141, 142, 151) différentes, et une quantité de fois où le premier segment de fonction appelle le deuxième segment de fonction est supérieure à une quantité de fois où le premier segment de fonction appelle un autre segment de fonction (111, 112, 121, 122, 131, 132, 141, 142) ; et
l'unité de chargement (1002) est également configurée pour charger (703), sur la base du script de chargement, un fichier de bibliothèque dynamique comprenant le premier segment de fonction et le deuxième segment de fonction vers une mémoire ; et
une unité de traitement (1003), configurée pour exécuter (704) le premier segment de fonction et pré-extraire le deuxième segment de fonction à partir de la mémoire.

7. Dispositif réseau (1000, 1100) selon la revendication 6, dans lequel le script de chargement comprend également un décalage d'adresse d'un troisième segment de fonction et un décalage d'adresse d'un quatrième segment de fonction, le décalage d'adresse du quatrième segment de fonction est une somme d'une taille du décalage d'adresse du troisième segment de fonction et une taille d'un espace de stockage du troisième segment de fonction, une fonction (111, 112, 121, 122, 131, 132, 141, 142, 151) correspondant au troisième segment de fonction et une fonction (111, 112, 121, 122, 131, 132, 141, 142, 151) correspondant au quatrième segment de fonction proviennent d'une même bibliothèque de fonctions, une quantité de fois où le troisième segment de fonction appelle le quatrième segment de fonction est supérieure à une quantité de fois où le troisième segment de fonction appelle un autre segment de fonction (111, 112, 121, 122, 131, 132, 141, 142), et le fichier de bibliothèque dynamique comprend également le troisième segment de fonction et le quatrième segment de fonction ; et
l'unité de traitement (1003) est également configurée pour exécuter (805) le troisième segment de fonction et pré-extraire (905) le quatrième segment de fonction à partir de la mémoire.

8. Dispositif réseau (1000, 1100) selon la revendication 6 ou 7, dans lequel
l'unité de traitement (1003) est également configurée pour :
obtenir (401) un fichier de traçage de programme, générer (402) un graphe d'appels sur la base du fichier de traçage de programme, dans lequel le graphe d'appels comprend un ordre d'appel de fonction et une quantité d'appels de fonction (111, 112, 121, 122, 131, 132, 141, 142, 151), déterminer (403), sur la base du graphe d'appels, une première séquence de segment de fonction comprenant le premier segment de fonction et le deuxième segment de fonction, et créer (404) un script de liaison sur la base des informations de séquence de la première séquence de segment de fonction ;
le dispositif réseau (1000, 1100) comprend également :
une unité de compilation, configurée pour compiler (405) un programme en une pluralité de segments de fonction (111, 112, 121, 122, 131, 132, 141, 142) ; et
une unité de liaison, configurée pour obtenir (406) la première séquence de segment de fonction à partir de la pluralité de segments de fonction (111, 112, 121, 122, 131, 132, 141, 142) sur la base du script de liaison ; et
l'unité de liaison est également configurée pour générer (407) un fichier de bibliothèque dynamique comprenant la première séquence de segment de fonction.

9. Dispositif réseau (1000, 1100) selon la revendication 6 ou 7, dans lequel
l'unité de traitement (1003) est également configurée pour :
obtenir (501) un fichier de traçage de programme, générer (502) un graphe d'appels sur la base du fichier de traçage de programme, dans lequel le graphe d'appels comprend un ordre d'appel de fonction et une quantité d'appels de fonction (111, 112, 121, 122, 131, 132, 141, 142, 151), déterminer (503), sur la base du graphe d'appels, d'une première séquence de segment de fonction comprenant le premier segment de fonction et le deuxième segment de fonction, allouer (504) un décalage d'adresse à chaque segment de fonction (111, 112, 121, 122, 131, 132, 141, 142) dans la première séquence de segment de fonction, et créer (505) le script de chargement sur la base du décalage d'adresse de chaque segment de fonction (111, 112, 121, 122, 131, 132, 141, 142) dans la première séquence de segment de fonction.

10. Dispositif réseau (1000, 1100) selon la revendication 9, dans lequel
l'unité de traitement (1003) est également configurée pour :
sélectionner une pluralité de fonctions objectives à partir du graphe d'appels, dans lequel deux quelconques de la pluralité de fonctions objectives n'ont pas de relation d'appel de fonction, et une quantité de fois où chaque fonction objective est appelée est supérieure ou égale à un seuil prédéfini, allouer un décalage d'adresse à un segment de fonction objective correspondant à la fonction objective, dans lequel le segment de fonction objective est en correspondance un à un avec un bit de mappage d'ensemble de cache compris dans le décalage d'adresse, et créer (809) le script de chargement sur la base du décalage d'adresse de chaque segment de fonction (111, 112, 121, 122, 131, 132, 141, 142) dans la première séquence de segment de fonction et le décalage d'adresse du segment de fonction objective.

11. Support de stockage lisible par ordinateur, stockant des instructions, dans lequel lorsque les instructions sont exécutées sur un ordinateur, l'ordinateur est activé pour réaliser le procédé selon l'une quelconque des revendications 1 à 5.

12. Produit de programme informatique comportant des instructions, qui lorsqu'elles sont exécutées sur un ordinateur, amènent l'ordinateur à réaliser le procédé selon l'une quelconque des revendications 1 à 5.
